# EUROPEAN PATENT SPECIFICATION

(11) **EP 3 492 348 B1**
(45) Date of publication and mention of the grant of the patent: **21.04.2021**
(21) Application number: 17834407.3
(22) Date of filing: 26.07.2017
(51) Int. Cl.: B60W 30/12, B62D 15/02, B62D 5/04, B62D 6/00

(54) **STEERING ASSISTANCE DEVICE AND STEERING ASSISTANCE METHOD**
LENKHILFEVORRICHTUNG UND LENKHILFEVERFAHREN
DISPOSITIF D'AIDE À LA DIRECTION ET SON PROCÉDÉ

(30) Priority: 27.07.2016 JP 2016146989
(43) Date of publication of application: 05.06.2019
(73) Proprietor: Isuzu Motors Limited, Tokyo 140-8722 (JP)
(72) Inventor: SUZUKI, Teruhiko, Fujisawa-shi Kanagawa 252-0881 (JP)
(74) Representative: Miller Sturt Kenyon
(86) International application number: PCT/JP2017/027041
(87) International publication number: WO 2018/021405

(56) References cited:
- JP-A- H09 309 453
- JP-A- H11 105 728
- JP-A- 2001 039 326
- JP-A- 2003 026 027
- JP-A- 2003 211 999
- JP-A- 2004 078 828
- JP-A- 2004 102 447
- JP-A- 2005 524 135
- JP-A- 2009 023 487
- JP-A- 2009 248 664
- JP-A- 2010 155 547
- US-A1- 2008 183 342
- US-A1- 2011 231 063
- US-A1- 2013 173 115
- US-A1- 2016 114 832

## Description

### TECHNICAL FIELD

This disclosure relates to a steering assistance device and a steering assistance method.

### BACKGROUND ART

There has been known a steering assistance device configured to assist steering of a vehicle to make the vehicle travel in a center of a lane (for example, Patent Literature 1). Further examples of systems that provide steering assistance to a driver can be seen in JP 2009-23487, US 2011/0231063, and US 2016/0114832. In particular these three documents disclose a steering assistance device, comprising:
a steering assistance unit capable of assisting steering of a vehicle to make the vehicle travel in the center of a lane;
a measurement unit, which measures an amount of lateral deviation of the vehicle from the center of the lane; and
a control unit, which, , in a case where the measured amount of lateral deviation is within a predetermined range from a predetermined amount for a predetermined period of time, controls the amount of steering assistance by the steering assistance unit such that the vehicle travels with deviation from the center of the lane by the predetermined amount.

### Citation List

### Patent Literature

Patent Literature 1: JP-A-2014-80177

### SUMMARY

### Technical Problem

Among drivers, there is drivers who tend to drive the vehicle to the left or right with respect to the center of the lane. Meanwhile, the steering assistance device in the prior art continues to assist the steering to make the vehicle travel in the center of the lane when a driver tends to keep the vehicle traveling on the left or right with respect to the center of the lane. Therefore, it may be difficult for the driver to steer by contrast.

This disclosure provides a steering assistance device and a steering assistance method which can assist steering of a vehicle according to steering tendency of a driver.

### Solution to Problem

A steering assistance device according to a first aspect of this disclosure includes: a steering assistance unit, capable of assisting the steering of a vehicle to make the vehicle travel in the center of a lane; a measurement unit, which measures an amount of lateral deviation of the vehicle from the center of the lane; and a control unit, which controls the amount of steering assistance by the steering assistance unit such that the vehicle travels with deviation from the center of the lane by a predetermined amount, in a case where the measured amount of lateral deviation is within a predetermined range from the predetermined amount for a predetermined period of time.

The control unit may control the amount of assistance according to a lapse of time.

The steering assistance device further includes a calculation unit, which calculates curvature of the lane, and the control unit may make the steering assistance unit to continue controlling the amount of steering assistance until the curvature is equal to or smaller than a predetermined value in a case where the amount of assistance is controlled by the steering assistance unit.

The control unit stops the controlling of the amount of steering assistance based on the amount of lateral deviation in a case where the curvature of the lane is greater than the predetermined value.

A steering assistance method according to a second aspect of this disclosure is a step of measuring an amount of lateral deviation of a vehicle from the center of a lane; and a step of controlling the amount of steering assistance by the steering assistance unit that assists steering of the vehicle such that the vehicle travels with deviation from the center of the lane by the predetermined amount, in a case where the measured amount of lateral deviation is within a predetermined range from a predetermined amount for a predetermined period of time.

### Advantageous Effects of the Invention

According to this disclosure, it is possible to assist the steering of the vehicle according to the steering tendency of the driver.

### BRIEF DESCRIPTION OF THE DRAWINGS

FIG. 1 is a diagram for explaining an overview of a steering assistance device according to an embodiment.
FIG. 2 is a diagram schematically showing a configuration of the steering assistance device according to the embodiment.
FIGS. 3A and 3B are diagrams showing a relationship between an amount of lateral deviation and an amount of torque generation.
FIG. 4 is a flow chart for explaining a flow of a steering assistance process which is related to a lane keeping support function and is executed by the steering assistance device according to the embodiment.

### DESCRIPTION OF EMBODIMENTS

### Overview of Embodiment

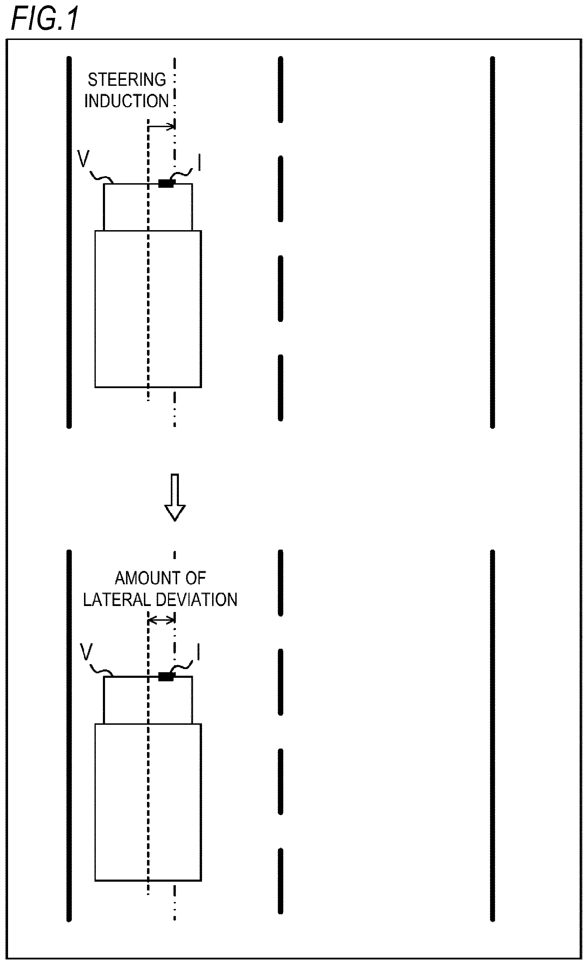

FIG. 1 is a diagram for explaining an overview of a steering assistance device according to an embodiment. The steering assistance device according to the embodiment is mounted on a vehicle V and is used for assisting steering of the vehicle V. Although not limited, the steering assistance device according to the embodiment is suitably used for a large-sized vehicle V such as a bus or a truck. In the following specification, it is assumed that the vehicle V is a large-sized vehicle V such as a bus or a truck.

The steering assistance device according to the embodiment analyzes an image in front of the vehicle V captured by an imaging device I and calculates an amount of lateral deviation of the vehicle V from a center of a lane on which the vehicle V travels. The steering assistance device assists the steering to make the vehicle V travel in the center of the lane based on the measured amount of lateral deviation. When the measured amount of lateral deviation is within a predetermined range for a predetermined period of time, the steering assistance device assists the steering such that the vehicle V travels with a deviation from the center of the lane by the amount of lateral deviation included in the predetermined range. Accordingly, when the driver of the vehicle V tends to make the vehicle V travel on the left or right with respect to the center of the lane, it is possible to assist the steering of the vehicle V according to the tendency.

### Functional Configuration of Steering Assistance Device 1

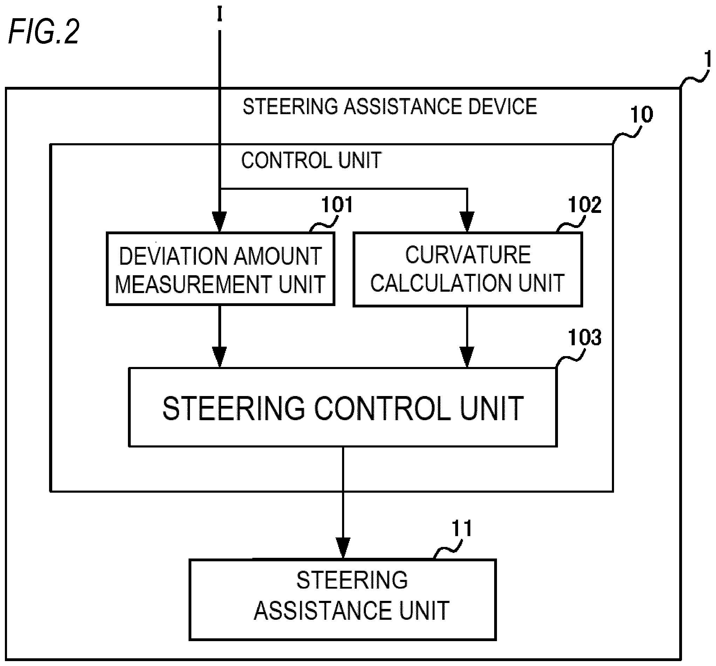

FIG. 2 is a diagram schematically showing a configuration of a steering assistance device 1 according to the embodiment. The steering assistance device 1 includes a control unit 10 and a steering assistance unit 11.

The control unit 10 is a calculation resource including such as a memory and a processor such as a CPU (Central Processing Unit) (not shown), and realizes functions of a deviation amount measurement unit 101, a curvature calculation unit 102, and a steering control unit 103 by executing a program.

The steering assistance unit 11 is an electric motor that applies torque (steering assistance force) to, for example, a steering shaft connected to a steering wheel ST via a gear or the like. The steering assistance unit 11 assists the steering of the vehicle V by applying torque to the steering shaft based on the control of the control unit 10 to make the vehicle V travel in the center of the lane.

The deviation amount measurement unit 101 acquires the image captured by the imaging device I. The deviation amount measurement unit 101 measures the amount of lateral deviation of the vehicle V from the center position of the lane on which the vehicle V travels by analyzing the acquired image. Specifically, the deviation amount measurement unit 101 analyzes the captured image to specify a central position of the traveling lane on which the vehicle V travels and a central position of the vehicle V on the traveling lane and measure a distance between the central position of the traveling lane and the central position of the vehicle V, thus measuring the amount of lateral deviation of the vehicle V from the central position of the traveling lane.

The curvature calculation unit 102 acquires an image captured by the imaging device I. The curvature calculation unit 102 calculates the curvature of the lane on which the vehicle V travels by analyzing the acquired image. For example, the curvature calculation unit 102 analyzes the acquired image to specify a position of a pixel in the image corresponding to the lane on which the vehicle V travels and calculates curvature of the lane based on the amount of change in the lateral direction of the position.

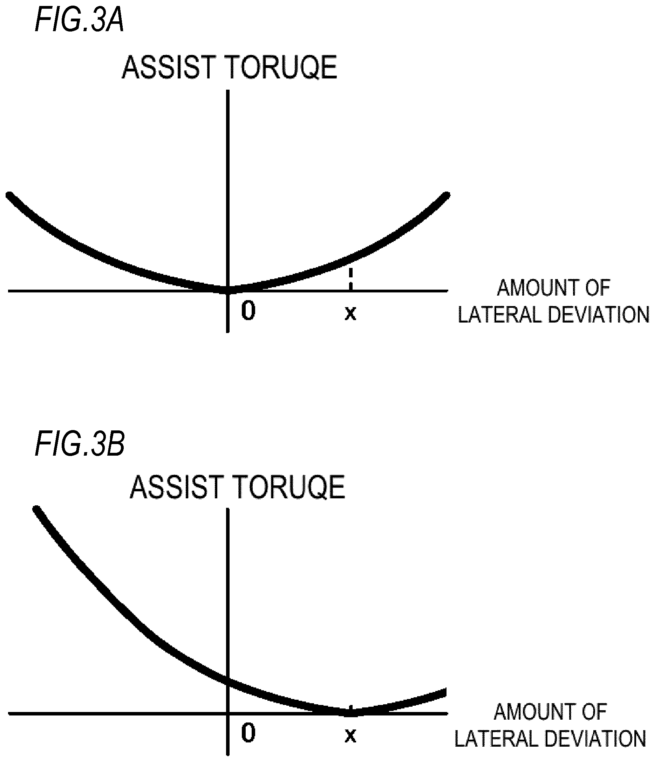

The steering control unit 103 causes the steering assistance unit 11 to generate torque in a direction to return the vehicle V to the center of the traveling lane based on the amount of lateral deviation measured by the deviation amount measurement unit 101 so as to assist the steering of the vehicle V. FIGS. 3A and 3B are diagrams showing the relationship between the amount of lateral deviation and the amount of torque generation. In FIGS. 3A and 3B, when the vehicle V is deviated to the right from the center of the lane, the amount of lateral deviation is a positive value, and when the vehicle V is deviated to the left, the amount of lateral deviation is a negative value. In addition, the torque generated when the amount of lateral deviation is positive is torque that guides the vehicle V towards the left direction and the torque generated when the amount of lateral deviation is negative is torque that guides the vehicle V towards the right direction.

First, the steering control unit 103 causes the steering assistance unit 11 to generate torque based on the characteristic shown in FIG. 3A and the measured amount of lateral deviation.

When the measured amount of lateral deviation is within a predetermined range for a predetermined period of time, the steering control unit 103 controls the amount of torque (amount of steering assistance) generated by the steering assistance unit 11 such that the vehicle V travels with a deviation from the center of the lane by the amount of lateral deviation included in the predetermined range.

For example, when the measured amount of lateral deviation is within a predetermined range (for example, within 50 cm) from a predetermined amount x for a predetermined period of time (for example, one minute), as shown in FIG. 3B, the steering control unit 103 changes the characteristic showing the relationship between the torque and the amount of lateral deviation by adjusting the position (offset amount) at which the amount of torque generated by the steering assistance unit 11 is 0 to the predetermined amount x. Further, the steering control unit 103 controls the amount of torque generated by the steering assistance unit 11 based on the characteristic shown in FIG. 3B. Here, in FIG. 3B, the torque generated when the amount of lateral deviation is greater than x is the torque that induces the vehicle V towards the left direction, and the torque generated when the amount of lateral deviation is positive is the torque that induces the vehicle V towards the right direction.

The steering control unit 103 controls the amount of torque generated by the steering assistance unit 11, that is, adjusts the offset amount step by step according to a lapse of time. For example, the steering control unit 103 does not directly change from the characteristic shown in FIG. 3A to the characteristic shown in FIG. 3B, but increases the position where the amount of torque generated by the steering assistance unit 11 is 0 by a predetermined amount according to a lapse of time so as to change the characteristic shown in FIG. 3A to the characteristic shown in FIG. 3B after the lapse of a first time.

In a case of controlling an amount of torque generated by the steering assist unit 11, the steering control unit 103 continues to control the amount of torque to be generated in the steering assistance unit 11 based on the characteristic and the amount of lateral deviation after offset until the curvature calculated by the curvature calculation unit 102 is equal to or less than a predetermined value, and resets the offset amount in response to a fact that the curvature exceeds a predetermined value. Thus, the steering assistance device 1 can continue the torque control according to the steering tendency of the driver until the curvature of the traveling lane is greater than the predetermined value.

When the curvature calculated by the curvature calculation unit 102 is greater than a predetermined value, the steering control unit 103 stops the adjustment of the offset amount based on the amount of lateral deviation. Thus, by controlling the amount of torque generated by the steering assistance unit 11 while the vehicle V is traveling on the curve, the vehicle V can be suppressed from approaching the oncoming lane side.

### Flow of Steering Assistance Process Executed by Steering Assistance Device 1

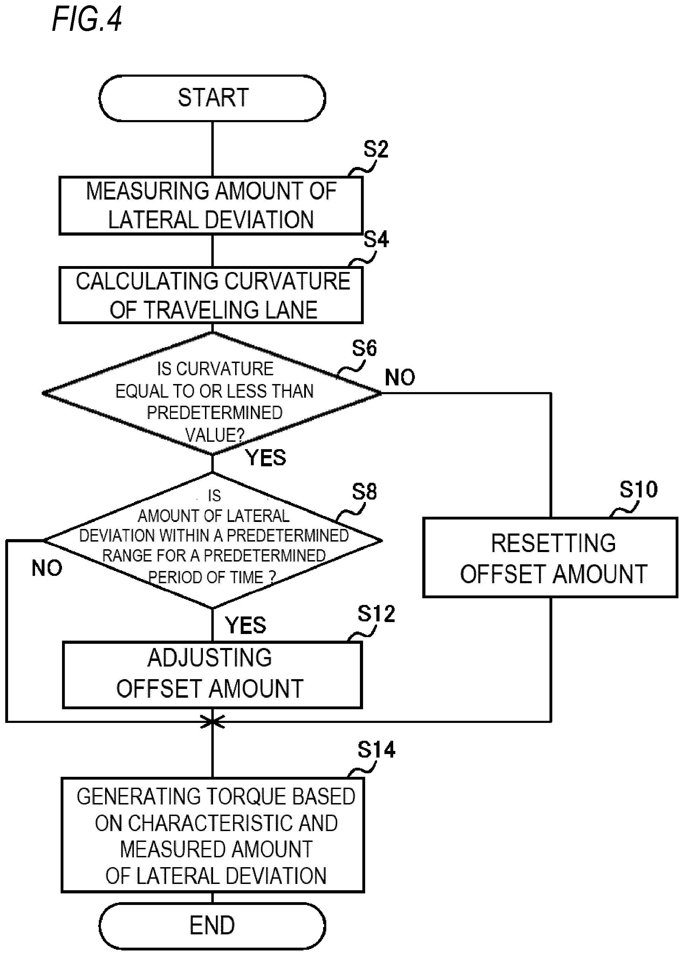

FIG. 4 is a flow chart for explaining a flow of a steering assistance process which is related to a lane keeping support function and is executed by the steering assistance device 1 according to the embodiment. The process in this flow chart starts, for example, when the vehicle V is traveling on the lane.

The deviation amount measurement unit 101 measures (S2) the amount of lateral deviation from the center of the traveling lane of the vehicle V.

The curvature calculation unit 102 calculates (S4) the curvature of the traveling lane of the vehicle V.

The steering control unit 103 determines (S6) whether or not the calculated curvature is equal to or less than the predetermined value. When the steering control unit 103 determines that the curvature is equal to or less than the predetermined value, the process proceeds to S8. In addition, when the steering control unit 103 determines that the curvature is greater than the predetermined value, the process proceeds to S10 and the offset amount is reset. The steering control unit 103 moves the process to S14 when the offset amount is reset.

In S8, the steering control unit 103 determines whether the measured amount of lateral deviation is within a predetermined range for a predetermined period of time. When the steering control unit 103 determines that the measured amount of lateral deviation is within the predetermined range for a predetermined period of time, the process proceeds to S12 to adjust the offset amount, and if it is determined that the amount of lateral deviation is not within the predetermined range, the process proceeds to S14.

In S14, the steering control unit 103 generates torque in the steering assistance unit 11 based on the characteristic and the amount of lateral deviation after offset. Thereafter, the steering control unit 103 ends the processing according to the flow chart. The steering assistance device 1 continues the control of the steering assistance unit 11 related to the lane keeping support function by repeating the above process while the vehicle V is traveling on the lane.

As described above, when the measured amount of lateral deviation is within a predetermined range from the predetermined amount for a predetermined period of time, the steering assistance device 1 according to the embodiment controls the amount of steering assistance by the steering assistance unit 11 to make the vehicle V travel with deviation by the predetermined amount from the center of the lane. Thus, when the driver tends to make the vehicle V travel on the left or right with respect to the center of the lane, it is possible to assist the steering of the vehicle V according to the tendency.

Further, since the steering assistance device 1 performs controlling the amount of torque generated by the steering assistance unit 11, that is, adjustment the offset amount stepwisely according to a lapse of time, it is possible to smoothly shift the torque control by the steering assistance unit 11 to the torque control according to the steering tendency of the driver.

While the embodiment of this disclosure has been described, the technical scope of the present disclosure is not limited to the above-described embodiment. It is apparent to persons skilled in the art that various alterations and improvements can be added to the above-described embodiment. It is also apparent from the scope of the claims that the embodiments added with such alterations or improvements can be included in the technical scope of the present disclosure.

### Industrial Applicability

According to this disclosure, it is possible to assist the steering of the vehicle according to the steering tendency of the driver.

### Description of Reference Numerals

- 1: steering assistance device
- 10: control unit
- 101: deviation amount measurement unit
- 102: curvature calculation unit
- 103: steering control unit
- 11: steering assistance unit
- I: capturing device
- ST: steering
- V: vehicle

## Claims

1. A steering assistance device, comprising:
a steering assistance unit (11), which is capable of assisting steering of a vehicle (v) to make the vehicle travel in the center of a lane;
a measurement unit (101), which measures an amount of lateral deviation of the vehicle (v) from the center of the lane;
a control unit (10) which, in a case where the measured amount of lateral deviation is within a predetermined range from a predetermined amount for a predetermined period of time, controls the amount of steering assistance by the steering assistance unit (11) such that the vehicle (v) travels with deviation from the center of the lane by the predetermined amount; and
a calculation unit (102), which calculates curvature of the lane;
wherein the control unit (10) makes the steering assistance unit (11) to continue controlling the amount of steering assistance while the curvature is smaller than or equal to a predetermined value in a case where the amount of assistance is controlled by the steering assistance unit (11); and
wherein the control unit (10) stops the controlling of the amount of steering assistance based on the amount of lateral deviation in a case where the curvature of the lane is greater than the predetermined value.

2. The steering assistance device according to claim 1,
wherein the control unit (10) performs controlling of the amount of assistance stepwisely according to a lapse of time.

3. A steering assistance method, comprising:
a step of measuring an amount of lateral deviation (52) of a vehicle (v) from the center of a lane; and
a step of controlling in a case where the measured amount of lateral deviation is within a predetermined range from a predetermined amount for a predetermined period of time, the amount of steering assistance (314) by a steering assistance unit (11) that assists steering of the vehicle (v) such that the vehicle travels with deviation from the center of the lane by the predetermined amount;
a step of calculating curvature of the lane
a step of controlling the amount of steering assistance while the curvature is smaller than a predetermined value in a case where the amount of assistance is controlled, and
a step of stopping the controlling of the amount of steering assistance based on the amount of lateral deviation in a case where the curvature of the lane is equal to or greater than the predetermined value.

## Patentansprüche

1. Lenkunterstützungsvorrichtung, umfassend:
eine Lenkunterstützungseinheit (11), die in der Lage ist, das Lenken eines Fahrzeugs (v) zu unterstützen, um das Fahrzeug in der Mitte eines Fahrstreifens fahren zu lassen;
eine Messeinheit (101), die einen Betrag der seitlichen Abweichung des Fahrzeugs (v) von der Mitte des Fahrstreifens misst;
eine Steuerungseinheit (10), die in einem Fall, in dem der gemessene Betrag der seitlichen Abweichung innerhalb eines vorbestimmten Bereichs von einem vorbestimmten Betrag für eine vorbestimmte Zeitdauer liegt, den Betrag der Lenkunterstützung durch die Lenkunterstützungseinheit (11) derart steuert, dass das Fahrzeug (v) mit einer Abweichung von der Mitte des Fahrstreifens um den vorbestimmten Betrag fährt; und
eine Berechnungseinheit (102), welche die Krümmung des Fahrstreifens berechnet;
wobei die Steuerungseinheit (10) die Lenkunterstützungseinheit (11) veranlasst, die Steuerung des Betrags der Lenkunterstützung fortzusetzen, während die Krümmung kleiner oder gleich einem vorbestimmten Wert ist, in einem Fall, in dem der Betrag der Unterstützung durch die Lenkunterstützungseinheit (11) gesteuert wird; und
wobei die Steuerungseinheit (10) die Steuerung des Betrags der Lenkunterstützung auf der Grundlage des Betrags der seitlichen Abweichung in einem Fall stoppt, in dem die Krümmung des Fahrstreifens größer als der vorbestimmte Wert ist.

2. Lenkunterstützungsvorrichtung nach Anspruch 1,
wobei die Steuerungseinheit (10) die Steuerung des Betrags der Lenkunterstützung schrittweise entsprechend einem Zeitablauf durchführt.

3. Lenkunterstützungsverfahren, umfassend:
einen Schritt des Messens eines Betrags der seitlichen Abweichung (52) eines Fahrzeugs (v) von der Mitte eines Fahrstreifens; und
einen Schritt des Steuerns, in einem Fall, in dem der gemessene Betrag der seitlichen Abweichung innerhalb eines vorbestimmten Bereichs von einem vorbestimmten Betrag für eine vorbestimmte Zeitdauer liegt, des Betrags der Lenkunterstützung (314) durch eine Lenkunterstützungseinheit (11), die das Lenken des Fahrzeugs (v) derart unterstützt, dass das Fahrzeug (v) mit einer Abweichung von der Mitte des Fahrstreifens um den vorbestimmten Betrag fährt;
einen Schritt des Berechnens der Krümmung des Fahrstreifens;
einen Schritt des Steuerns des Betrags der Lenkunterstützung, während die Krümmung kleiner ist als ein vorbestimmter Wert in einem Fall, in dem der Betrag der Unterstützung gesteuert wird, und
einen Schritt des Abbrechens der Steuerung des Betrags der Lenkunterstützung auf der Grundlage des Betrags der seitlichen Abweichung in einem Fall, in dem die Krümmung des Fahrstreifens gleich oder größer als der vorbestimmte Wert ist.

## Revendications

1. Dispositif d'aide à la direction, comprenant :
une unité d'aide à la direction (11), qui est capable d'aider la direction d'un véhicule (v) pour faire voyager le véhicule dans le centre d'une piste ;
une unité de mesure (101), qui mesure une quantité de déviation latérale du véhicule (v) du centre de la piste ;
une unité de commande (10) qui, dans un cas où la quantité mesurée de déviation latérale se situe dans une plage prédéterminée d'une quantité prédéterminée durant une période de temps prédéterminée, commande la quantité d'aide à la direction par l'unité d'aide à la direction (11) de telle manière que le véhicule (v) voyage avec une déviation du centre de la piste par la quantité prédéterminée ; et
une unité de calcul (102), qui calcule la courbe de la piste ;
l'unité de commande (10) faisant continuer l'unité d'aide à la direction (11) à commander la quantité d'aide à la direction alors que la courbe est inférieure ou égale à une valeur prédéterminée dans un cas où la quantité d'aide est commandée par l'unité d'aide à la direction (11) ; et
l'unité de commande (10) interrompant la commande de la quantité d'aide à la direction sur la base de la quantité de déviation latérale dans un cas où la courbure de la piste est plus grande que la valeur prédéterminée.

2. Dispositif d'assistance à la direction selon la revendication 1,
dans lequel l'unité de commande (10) effectue la commande de la quantité d'aide par étape selon un laps de temps.

3. Procédé d'aide à la direction, comprenant :
une étape de mesure d'une quantité de déviation latérale (52) d'un véhicule (v) du centre d'une piste ; et
une étape de commande dans un cas où la quantité mesurée de déviation latérale se situe dans une plage prédéterminée d'une quantité prédéterminée durant une période de temps prédéterminée, la quantité d'aide à la direction (314) par une unité d'aide à la direction (11) qui aide la direction du véhicule (v) de telle manière que le véhicule voyage avec une déviation du centre de la piste par la quantité prédéterminée ;
une étape de calcul de la courbe de la piste ;
une étape de commande de la quantité d'aide à la direction alors que la courbure est inférieure à une valeur prédéterminée dans un cas où la quantité d'aide est commandée, et
une étape d'interruption de la commande de la quantité d'aide à la direction sur la base de la quantité de déviation latérale dans un cas où la courbure est supérieure ou égale à la valeur prédéterminée.
